# EUROPEAN PATENT APPLICATION

(11) **EP 4 800 623 A2**
(43) Date of publication of application: **02.09.2026**
(21) Application number: 26191720.7
(22) Date of filing: 01.10.2024
(51) Int. Cl.: G06Q 10/105

(54) **COMPUTER-IMPLEMENTED MANIPULATION OF DATA STRUCTURES**

(30) Priority: 02.10.2023 US 202363541989 P; 18.10.2023 US 202318381337
(62) Document number(s) of the earlier application(s) in accordance with Art. 76 EPC: 24203958.4 / 4 535 248
(71) Applicant: Palantir Technologies Inc., Aventura, Florida 33180 (US)
(72) Inventor: JENKS, Edward Chester, Denver, 80202 (US)
(74) Representative: Jolliffe, Jack Louis

(57) **Abstract**

Methods, apparatuses and computer programs for manipulating data structures are provided. A method includes: receiving an indication of a target outcome, where the target outcome defines a transformation of a first dataset; providing to a first artificial intelligence model one or more requests to generate candidate functions; receiving, in response to the one or more requests, a plurality of distinct candidate functions from the first artificial intelligence model; providing, to a second artificial intelligence model, a request to generate the transformation on a first subset; receiving, from the second artificial intelligence model, an AI transformation of the first subset; executing each of the plurality of candidate functions on the first subset to generate a plurality of test; validating one or more of the candidate functions; and executing one of the validated candidate functions on the first dataset to achieve the transformation of the first dataset.

## Description

### Field of the disclosure

The present disclosure relates to methods, apparatuses, and computer programs for performing computing processes in a computing platform.

### Background

It is often desirable to perform manipulations of large volumes of data. A large dataset can have billions of rows, and it is challenging to perform manipulations on such datasets. Data processing platforms may offer in-built functionality that allows a user to perform manipulations of the dataset. Where data processing platforms do not provide in-built functionality corresponding to a particular manipulation of the dataset, it may be possible for users to provide customised computing functions to act on a dataset. However, the generation of customised computing functions has several disadvantages. In order to generate customised computing functions, the user must have significant knowledge of both the functionality of a data processing platform and a programming language in which customised computing functions can be written. Even when a user has such expertise, generating such a customised computing function can be time consuming and unreliable. For example, a customised computing function that is provided by a user may introduce erroneous manipulations into a dataset, and such erroneous manipulations can go undetected.

In view of the above, there is a need for new methods and systems for manipulating large datasets.

### Summary of Invention

According to one aspect of the disclosure, a computer-implemented method of manipulating data structures is provided. The method comprises:
receiving an indication of a target outcome, where the target outcome defines a transformation of a first dataset;
providing to a first artificial intelligence model, based on the indication of a target outcome, one or more requests to generate candidate functions for generating a transformation in accordance with the target outcome when executed on the first dataset;
receiving, in response to the one or more requests, a plurality of distinct candidate functions from the first artificial intelligence model;
providing, to a second artificial intelligence model, a request to generate the transformation on a first subset, wherein the first subset is a subset of the first dataset; receiving, from the second artificial intelligence model, an AI transformation of the first subset;
executing each of the plurality of candidate functions on the first subset to generate a plurality of test transformations of the first subset;
validating one or more of the candidate functions, where a candidate function is validated by determining that the test transformation of the first subset generated by the candidate function matches the AI transformation of the first subset; and executing one of the validated candidate functions on the first dataset to achieve the transformation of the first dataset.

Preferably, the request to generate the transformation on a first subset comprises the first subset.

In some examples, the first and second artificial intelligence model are the same artificial intelligence model.

In some examples, the indication of the target outcome is a natural language description of a transformation to be applied to the first dataset.

In some examples, the one or more requests to generate candidate functions each comprise a context portion and the natural language description of the transformation to be applied to the first dataset, wherein the context portion comprises a schema of the first data set.

In some examples, the context portion further comprises examples of target outcomes and corresponding candidate functions.

In some examples, the computer-implemented method further comprises:
extracting a schema of the first dataset from the first dataset; and
generating the one or more requests to generate candidate functions by combining the indication of the target outcome with a schema of the first dataset.

In some examples, the computer-implemented method further comprises:
generating the first subset, wherein generating the first subset comprises one or more of:
selecting a randomly distributed sample of rows from the first dataset;
selecting evenly spaced rows from the first dataset; and
identifying rows comprising non-standard entries and selecting the identified rows.

In some examples, generating the first subset comprises generating a dataset having the same schema as the first dataset, and wherein the values of cells in the subset are generated from a source other than the first dataset.

In some examples, the request to generate the transformation on the first subset comprises a plain text formatted version of the first subset combined with the indication of a target outcome.

In some examples, the AI transformation of the first subset is received from the artificial intelligence model in plain text form, and
wherein validating one or more of the candidate functions comprises parsing the AI transformation of the first subset into a tabular data form and checking whether one or more of the test transformations matches the AI transformation.

In some examples, at least one of the first artificial intelligence model and the second artificial intelligence models are large language models (LLMs).

In some examples, the first artificial intelligence model is fine-tuned to provide the plurality of candidate functions in a predetermined programming language as an output in response to an input comprising the indication of the target outcome and a schema, and
the second artificial intelligence model is fine-tuned to provide the AI transformation as an output in response to an input comprising the first subset and the indication of the target outcome.

In some examples, the computer-implemented method further comprises: determining a first validated candidate function of a plurality of validated candidate functions for which the time taken to generate the test transformation is shorter than the time taken for all other validated candidate functions to generate respective test transformations, wherein the validated candidate function that is executed on the first dataset is the first validated candidate function.

In another aspect of the disclosure, there is provided a non-transitory computer readable medium comprising instructions that, when executed, cause one or more processors of a computing system to perform the method of the first aspect of the disclosure.

In another aspect of the disclosure, there is provided an apparatus comprising: one or more processors; and a memory storing instructions that, when executed by the one or more processors, cause the apparatus to perform the method of the first aspect of the disclosure.

### Brief Description of the Figures

Example embodiments will now be described by way of non-limiting example with reference to the accompanying drawings, in which:
FIG. 1 is a schematic illustration of functional elements of embodiments of the present disclosure;
FIG. 2 is a flow diagram showing processing operations that may be performed in accordance with example embodiments;
FIG. 3 is a schematic illustration of a process of generating a request for an artificial intelligence model to generate candidate functions according to embodiments;
FIG. 4 is a schematic illustration of the generation of a plurality of candidate functions by an artificial intelligence model according to embodiments of the disclosure;
FIG. 5 is a schematic illustration of the generation of a subset of a dataset in accordance with embodiments of the disclosure;
FIG. 6 is a schematic illustration of the generation of a request to an artificial intelligence model to generate a transformation on a subset according to example embodiments.
FIG. 7 is a schematic illustration of an AI transformation of a subset generated in response to a request to generate a transformation of the subset in accordance with example embodiments.
FIG. 8 is a schematic illustration of the process of executing candidate functions on a subset to generate test transformations in accordance with example embodiments.
FIG. 9 shows a block diagram of an exemplary computer system for use in some embodiments.

### Detailed Description

Example embodiments relate to methods, systems and computer programs for performing manipulations of a dataset. In the methods, systems and computer programs of the example embodiments, a computing function is generated based on a user input and applied to a dataset. In order to generate the computing function, a plurality of candidate functions for operating on a dataset are generated by an artificial intelligence model based on a user input describing a desired outcome of a transformation on a dataset. A suitable candidate function is identified based on verification steps and subsequently applied to a dataset to generate the desired transformation. Verification of candidate functions is performed by comparing the results of candidate computing functions on a sample dataset with manipulations generated by an artificial intelligence model acting explicitly on the sample dataset. The verified computing function is then applied to the dataset to generate a transformation of the dataset. Embodiments of the present invention can achieve manipulations of large datasets with greater computational efficiency than using explicit transformations of the large dataset by an artificial intelligence model. Furthermore, embodiments of the present invention are able to provide more accurate manipulations of a large dataset in comparison with computing functions that are not verified using artificial intelligence model generated manipulations acting explicitly on a sample dataset. By generating and verifying new computing functions based on a user input, transformations within data platform can be defined by a user and applied to large datasets where manual manipulation of the datasets would not be possible.

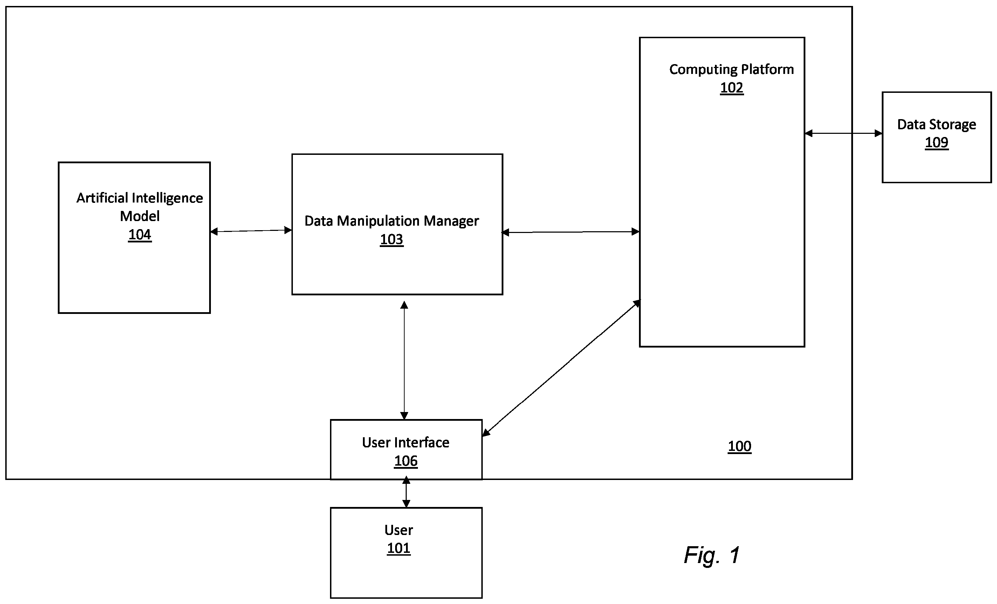

Fig. 1 illustrates an example of a computing system 100 for performing manipulation of datasets in accordance with embodiments of the disclosure.

The computing system 100 comprises a data manipulation manager 103, a data processing platform 102, a data storage 109, a user interface 106 and an artificial intelligence model 104. Some or all of the elements of the computing system 100 may be located in a single server or device. However, different parts of the computing system 100 may be hosted in remote locations or may be distributed across one or more servers.

The data manipulation manager 103 comprises hardware, software, firmware or a combination thereof for performing processes in accordance with embodiments described herein. The data manipulation manager 103 communicates with other aspects of the computing device and with outside entities to perform processing operations.

The data processing platform 102 is a computing platform for performing data analytics and data processing operations and tasks and is capable of performing a number of predefined manipulations of datasets. As described in more detail below, the embodiments of the present disclosure allow a computing system to perform manipulations of datasets that are not defined in the predefined manipulations of the data processing platform 102.

The data processing platform 102 can access a data storage 109, which comprises stored data for processing by the data processing platform 102. The data storage 109 includes data files, which may include tabular data arranged in cells, rows and columns. Embodiments of the present disclosure are particularly advantageous when the datasets recorded in data files are very large. A large, tabular dataset may, for example, include millions or billions of rows, for which manual manipulation of the dataset by a user is not possible.

A user 101 provides commands to the computing system 100 and receives responses from the computing system 100 via user interface 106. The user interface 106 may include a keyboard and a display or other suitable interface technology capable of receiving user inputs from the user and returning computer generated responses to the user, such as a microphone and a speaker. The user 101 can access the data processing platform 102 and datasets stored in the data storage 109 via the user interface 106. User inputs received at the user interface 106 may be provided to the data processing platform 102 via the data manipulation manager 103. Alternatively, user inputs may be sent directly from the user interface 106 to the data processing platform 102, and the data processing platform 102 may communicate with the data manipulation manager via further calls.

The data processing platform 103 provides in-built transformation functions which allow datasets to be manipulation in accordance with pre-determined functions. For example, the data processing platform 103 may provide functions causing the rows of dataset to be re-ordered such that values appearing in a selected column are provided in descending or ascending order or functions causing date entries in a column to be converted from a first format to a second format.

The data manipulation manager 103 is in communication with an artificial intelligence model 104, such as a large language model (LLM). The data manipulation controller may provide inputs to the artificial intelligence model 104 and receive outputs from the artificial intelligence model 104 in response to the inputs. In some examples, the data manipulation manager 103 provides inputs to the artificial intelligence model 104 in the form of plain text and receives outputs from the artificial intelligence model in the form of plain text. The artificial intelligence model 104 may be an LLM trained on publicly available data without fine tuning for the purposes of the invention, such as an instance of an LLM in accordance with OpenAI's GPT series. In some embodiments, the artificial intelligence model may be an LLM that has been fine-tuned to achieve improved performance when used in embodiments of the present disclosure. The skilled person will understand that other artificial intelligence models may be used in place of the LLMs described herein. In the example embodiments described in detail below, the same artificial intelligence model 104 is used in all steps of the invention. However, different artificial intelligence models 104 could be used in different steps of the invention. For example, the artificial intelligence model 104 used to generate candidate models may be different to the artificial intelligence model 104 used to generate an AI transformation of a dataset.

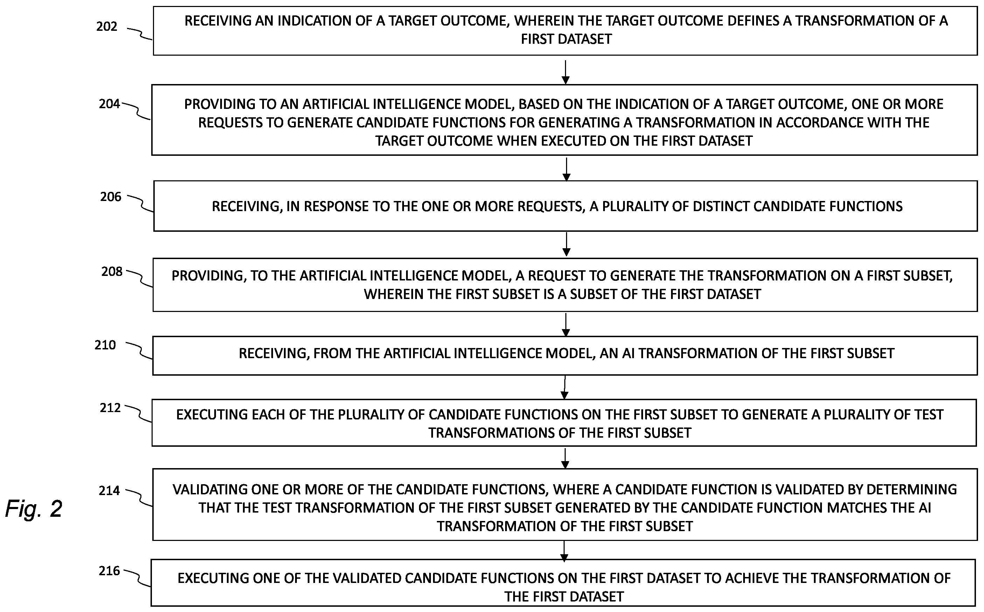

FIG. 2 is a flow diagram showing processing operations that may be performed by a computing system in accordance with one or more example embodiments. The processing operations may be performed using hardware, software, firmware or a combination thereof.

The operations of Fig. 2 are particularly advantageous in circumstances when a user 101 desires to apply a transformation to a dataset for which no in-built predefined function exists in the data processing platform 102. For example, a user 101 may desire to enact a complex transformation for a purpose that was not envisaged by the creators of the data processing platform 102 or may desire to enact a transformation on an unclean dataset for which existing functions do not generate reliable outputs. The operations of Fig. 2 are described below with reference to illustrative example embodiments.

In step 202, the data manipulation manager 103 receives an indication of a target outcome, wherein the target outcome defines a transformation of a first dataset. A user 101 may identify a first dataset stored in the data storage 109 for manipulation and provide an indication of a target outcome defining a transformation that the user 101 desires to apply to the first dataset. The indication of the target outcome may comprise a natural language description of the target outcome. The natural language description of the target outcome may comprise a command to the artificial intelligence model 104. The transformation may, for example, comprise one or more of: modification of the contents of cells, modification of the order of rows or columns, deletion of rows or columns, creation of new rows or columns based on the contents of existing rows, columns or cells, and other modifications and combinations of modifications of the contents of the dataset. The indication of the target outcome may include criteria for identifying rows, columns and/or cells to be modified and a description of how to determine an output state of the dataset based on an input state of the dataset. Examples of indications of target outcomes include the following natural language strings: "make all values in the name column uppercase", "order the dataset by ascending values in the salary column", "convert all values in the date column into YYYY-MM-DD form and order the dataset by date", "generate a new column titled name + age where the values of the name + age cells for each row are a concatenation of the value of the name column and the age column for that row", "place all the rows into discrete bins having salary ranges of $5,000 and provide a new column to indicate the bin to which each row belongs", and "convert text content of cells in the age column into numerals and replace unrecognizable age cells with zero".

The indication of the target outcome may be provided by the user 101 via the user interface 106 of the computing system. For example, the user 101 may provide the indication of the target outcome in text using a keyboard or may speak the indication of the target outcome into a microphone. In some examples, the user 101 may provide the indication of the target outcome to the data manipulation manager 103 via the data processing platform 102. In these examples, the data processing platform 102 may prompt the user to provide an indication of a target outcome. In other examples, the user 101 may provide the indication of the target outcome to a separate application integrated with the data manipulation manager 103.

In step 204, the data manipulation manager 103 provides to the artificial intelligence model 104 one or more requests to generate candidate functions for generating a transformation in accordance with the target outcome when executed on the first dataset. The one or more requests are based on the indication of a target outcome received in step 204. For example, the requests may take the form of a plain text prompt including the indication of a target outcome, where the prompt acts as an input to the artificial intelligence model 104. In examples where the artificial intelligence model 104 is configured to receive inputs in a format other than plain text, the indication of a target outcome may be provided by the data manipulation manager 103 in the appropriate format.

Where a single request is sent to the artificial intelligence model 104, the request includes an indication that the artificial intelligence model 104 should provide a plurality of distinct candidate functions in response to the request. The request may include an indication of the number of distinct candidate functions that should that be provided in response to the request. For example, the request may specify that five (or any other number) distinct candidate functions should be provided in response to the request. In some examples, the data manipulation manager 103 may provide repeated requests to the artificial intelligence model 104 for a single candidate function in order to obtain a plurality of candidate functions in response to the requests. For example, the data manipulation manager 103 may send five (or any other number) requests for the artificial intelligence model a single candidate function. In examples where repeated requests for candidate functions are provided to the artificial intelligence model 104, the temperature parameter of the artificial intelligence model is set to be non-zero in order to increase the probability of obtaining distinct candidate functions in response to each of the repeated requests. Preferably, the temperature parameter is optimized to generate large variance between candidate functions while maintaining high accuracy in the candidate functions.

The one or more requests to generate candidate functions may comprise a text string comprising a context portion concatenated with the indication of a target outcome received in step 204. In some examples, such as when the artificial intelligence model is not fined-tuned for use in embodiments of the present disclosure (for example, where the artificial intelligence model is an LLM trained on a corpus of publicly available literature, such as an LLM of the GPT series), the context portion may include an indication of the data processing platform 102 being used and instructions to generate one or more distinct candidate functions that, when executed on the first dataset, would achieve the target outcome. The context portion may specify a programming language in which the candidate function should be provided. For example, the context portion may specify that the candidate function is written in one of Python, Java or SQL. The context portion may also include schema information of the first dataset, where the schema of the first dataset indicates one or more of the column names, the type of data in each column, and whether or not given columns require a null check. The schema information may be automatically extracted from the first dataset by the data manipulation manager 103 and inserted into the context portion. The context portion may include examples of inputs and outputs (i.e. pre-generated examples of indications of target outcomes and corresponding candidate functions that are suitable for achieving the target outcome) in order to restrict the artificial intelligence model 104 to a formatted response.

In some examples, the context portion may include information regarding the functionality of the data processing platform 102. For example, the context portion may provide a natural language description of basic operations that can be performed in the data processing platform 102 and, preferably, how these operations can be combined to achieve use cases. This is particularly advantageous when the data processing platform 102 includes functionality that is not described in publicly available documents or is not well-known.

In some examples, the artificial intelligence model 104 may be fine-tuned to provide suitable outputs in response to target outcome inputs. When the artificial intelligence model 104 is fine-tuned, less context is needed to achieve reliable outputs from the artificial intelligence model 104, and the context portion of the prompt may include less information than examples where the artificial intelligence model is not fine-tuned. For example, the context portion may only include schema information extracted from the first dataset in these embodiments. Fine-tuning the artificial intelligence model 104 may involve performing training using supervised learning, transfer learning, or reinforcement learning.

In some embodiments, the artificial intelligence model 104 may return a clarifying query to the data manipulation manager 103 prior to returning candidate functions. For example, the artificial intelligence model 104 may request a user input to clarify what should happen to edge cases or regarding ambiguities in the target outcome. For example, the artificial intelligence model 104 may request clarification regarding how to transform a null value. In response to the clarifying query, the user 101 provides a plain text response including further information to the artificial intelligence model 104. In some examples, the context portion of the request should indicate conditions under which the artificial intelligence model 104 should request clarifying information. For example, the context portion of the request may indicate that the artificial intelligence model 104 should request clarifying information if part of the indication of the target outcome is ambiguous. In other examples, the artificial intelligence model 104 is fine-tuned to request clarifying queries.

In response to receiving the one or more requests to generate candidate functions, the artificial intelligence model 104 provides as an output a plurality of distinct candidate functions. The plurality of distinct candidate functions are received by the data manipulation manager 103 in step 206. The candidate functions are output from the artificial intelligence model as plain text computing code in a language and format specified in the request prompt or by the fine-tuning of the artificial intelligence model 104. The output of the artificial intelligence model 104 may also include an indication of the columns, rows or cells of the first dataset that the candidate functions should be applied to.

In some examples, the data manipulation manager 103 attempts to execute each of the candidate functions on a sample of columns, row or cells of the first dataset to ensure that the functions are able to successfully run to completion. The sample of columns, rows or cells may be the same as the subset discussed in more detail below with reference to step 208. Where a candidate function fails to run successfully, the data manipulation manager 103 returns the candidate function to the artificial intelligence model 104 for repair. This process may be repeated iteratively until the number of attempts to repair the candidate function reaches a predetermined threshold value (e.g. three, five, ten attempts etc.), after which the candidate function is discarded if it has not been repaired successfully.

In step 208, the data manipulation manager 103 provides a request to the artificial intelligence model 104 to generate the transformation corresponding to the target outcome on a subset of the first dataset. The subset of the first dataset is provided to the artificial intelligence model 104 as part of the request to generate the transformation corresponding to the target outcome. The subset of the first dataset is a sample of the first dataset that has been extracted from the first dataset and converted into plain text. The data manipulation manager 103 may generate the subset of the first dataset by extracting information from the first dataset prior to step 208. The request to generate the transformation on the subset of the first dataset may have the form of a prompt comprising the subset of the first dataset formatted in plain text with the target outcome appended to the subset of the first dataset. In contrast to step 204, in which the artificial intelligence model is requested to generate functions which result in a transformation of a dataset when executed, the request to generate a transformation of the subject of the first dataset requires that the artificial intelligence model 104 performs explicit manipulations of the subset of the first dataset to generate the transformation. Explicit manipulations of a dataset by an artificial intelligence model refer to manipulations of a dataset in which a dataset is explicitly provided to the artificial intelligence model 104 as part of an input and a transformed version of the dataset is returned by the artificial intelligence model 104 in an output.

In step 210, the artificial intelligence model 104 provides as an output an AI transformation of the subset of the first dataset to the data manipulation manager 103. The AI transformation of the subset of the first dataset comprises a plain text version of the subset of the first dataset as manipulated by the artificial intelligence model 104 when explicitly instructed to manipulate the subset in accordance with the target outcome. The plain text version of the AI transformation is then parsed into a dataset by the data manipulation manager 103.

Explicit manipulation of a dataset by an artificial intelligence model 104 is generally far more computationally expensive and time consuming than execution of simple code functions to perform data manipulations. The computational cost of performing explicit manipulations scales rapidly with the size of the dataset. In order to reduce the computational cost when explicitly manipulating the subset of the first dataset by the artificial intelligence model 104, the subset is chosen to have a substantially smaller size than the first data set. The subset will usually be several orders of magnitude smaller than the first dataset. The subset may be generated to have specified number of rows. For example, the subset may include 5, 10, 50 or 100 rows of the first dataset. Alternatively, the subset may be generated to have a specified proportion of the number of rows of the first dataset. For example, the subset may include fewer than 1%, fewer than 0.1% or fewer than 0.01% of the rows of the first dataset. The subset of the first dataset may be selected as a random sample of rows of the first dataset. In some examples, the subset may be selected by selecting rows distributed throughout the first dataset at even intervals in order to obtain a representative range of values. The subset may, for example, comprise rows of the first dataset that are numbered with an integer multiple of a spacing parameter, s, that is greater than 1. For example, the subset may include only every 5^{th}, 10^{th}, 100^{th}, or 1000^{th} row of the first dataset. In other examples, selecting the subset may comprise identifying rows comprising non-standard entries, such as null values or inconsistent formatting, in order to generate manipulations for which there is a higher probability that the candidate functions will fail to replicate. In some examples, a combination of these methods may be used to generate the subset.

In some examples, the first dataset may comprise sensitive or confidential data. The artificial intelligence model 104 may be operated by a third party and it may therefore be preferable not to provide the artificial intelligence model 104 with sensitive or confidential data. In this case, the data of the subset may be anonymised by replacing the data of the cells with non-sensitive values having the same data type as the original data based on the schema. In particular, the non-sensitive values may be generated based on type and nullability information included in the schema. The non-sensitive values may be extracted from a template comprising non-sensitive values of different data types and nullability.

In the exemplary embodiment described in detail, the artificial intelligence model 104 used to generate an AI transformation of the subset is the same artificial intelligence model 104 used to generate candidate functions. However, in other embodiments, different first and second artificial intelligence models may be used in these steps. Where the artificial intelligence models 104 are fine-tuned, it is particularly advantageous to use different first and second artificial intelligence models that are fine-tuned for generating candidate functions and for generating AI transformations respectively.

In some examples, the user may be presented with the AI transformation and prompted to confirm that the AI transformation has correctly implemented the target outcome before proceeding to the next steps. In this example, the data manipulation manager 103 may request feedback from the user 101 to provide to the artificial intelligence model 104 in order for the artificial intelligence model 104 to correct the AI transformation.

In step 212, the data manipulation manager 103 executes each of the plurality of candidate functions separately on the same subset used in the input to the artificial intelligence model 104 to generate the AI transformation in step 210. For each candidate function, a respective test transformation is output corresponding to the candidate function acting on specified columns, rows or cells of the subset, such that a corresponding test transformation is generated for each candidate function. In other words, each test transformation is a dataset generated by applying a respective candidate function to the subset of the first dataset.

In step 214, the data manipulation manager 103 compares each test transformation with the AI transformation. Where the AI transformation matches the test transformation, the candidate function that was used to generate the test transformation is considered to be validated. Validation of the test transformations may comprise parsing a text version of the AI transformation output by the artificial intelligence model into the same tabular data format as the first dataset and the test transformations. The plurality of test transformations are then compared to the AI transformation to identify test transformations that match the AI transformation. Where a given test transformation does not match the AI transformation, the candidate function that generated the test transformation is considered inaccurate and is not validated.

Validation of candidate functions based on comparisons of the test transformations generated by candidate functions with AI transformations generated by explicit manipulation of a subset by an artificial intelligence model 104 can achieve significantly improved accuracy of candidate functions in comparison to the use of AI generated functions without validation. In particular, the accuracy of artificial intelligence models such as LLMs in generating explicit transformations of datasets is greater than the accuracy of artificial intelligence models in generating candidate functions for performing dataset manipulations. Therefore, by generating a plurality of distinct candidate functions and validating the candidate functions by comparison with the explicit AI transformations, the high accuracy of artificial intelligence models in performing explicit data manipulations can be leveraged to increase the accuracy of dataset transformations generated by computing functions that have been generated by artificial intelligence models.

In step 216, the data manipulation manager 103 executes one of the validated candidate functions on the first dataset to generate the transformation of the first dataset to achieve the target outcome. Executing the validated candidate function may comprise identifying rows, columns or cells for which the candidate function should be applied based on the response of the artificial intelligence model 104 to the request to generate candidate functions, and executing the validated candidate function on the identified rows, columns or cells.

Because execution of a simple function in order to manipulate a dataset requires significantly less computational resources than explicit manipulation of a dataset by an artificial intelligence model, the embodiments of the present disclosure provide a computationally efficient means of generating transformations of datasets based on user defined target outcomes. Furthermore, because explicit AI transformations of a subset of the first dataset are used to validate candidate functions, the accuracy of the transformations generated by validated candidate functions is comparable to the accuracy of explicit AI transformations of the entire dataset while being substantially more computationally efficient.

In some embodiments, the data manipulation manager 103 may stop validation of candidate functions when a first candidate function is validated. That candidate function may then be selected for execution on the first dataset. In other embodiments, the data manipulation manager 103 may validate a plurality of distinct candidate functions. More than one candidate functions is validated, further criteria may be used to select a candidate function for execution on the first dataset. In some embodiments, the data manipulation manager 103 may select the validated candidate function having the shortest run time or the lowest computational complexity for execution on the first dataset. The run time of the validated candidate functions may be compared based on the time required to execute the candidate functions on the first subset.

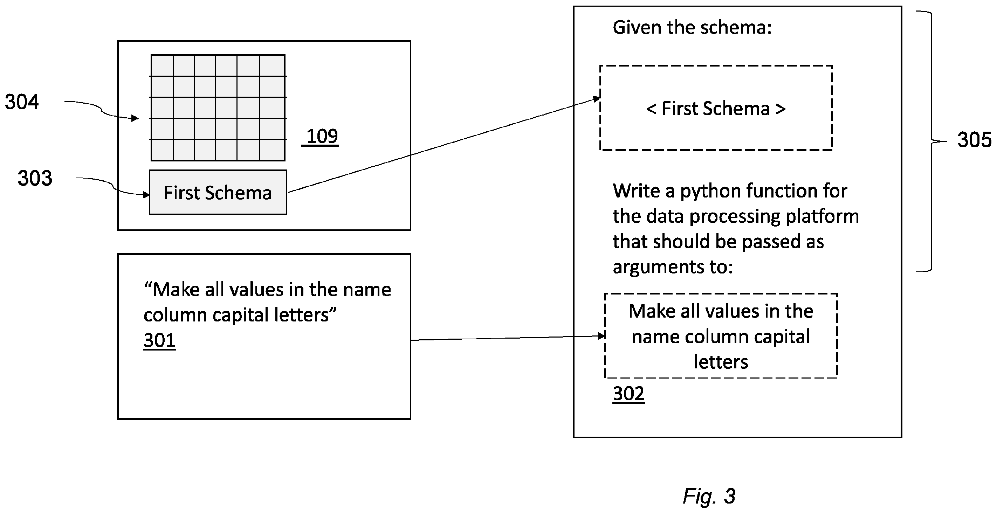

Fig. 3 schematically illustrates a process of generating a request 302 for an artificial intelligence model to generate candidate functions for generating a transformation in accordance with the target outcome when executed on the first dataset.

The data manipulation manager 103 generates the request by combining information describing a first schema 303 extracted from the first dataset 304 with user input text 301 indicating a target outcome. The request 302 comprises a context portion 305, which includes natural language instructions for the artificial intelligence model 104, and a natural language description of the first schema 303. The instructions for the artificial intelligence model 104 may be retrieved from a database of request templates for requests for artificial intelligence models 104.

In some embodiments, the context portion 305 may include further information, such as example inputs and outputs to illustrate the required format of the response.

The request 302 illustrated in Fig. 3 is a request for a single candidate function. The request 302 illustrated in Fig. 3 may be repeatedly provided to the artificial intelligence model 104 in order to generate a plurality of candidate functions, which each candidate function being provided as the output of a respective requeset. In other examples, the context portion 305 may indicate the number of candidate functions to be returned by the artificial intelligence model 104.

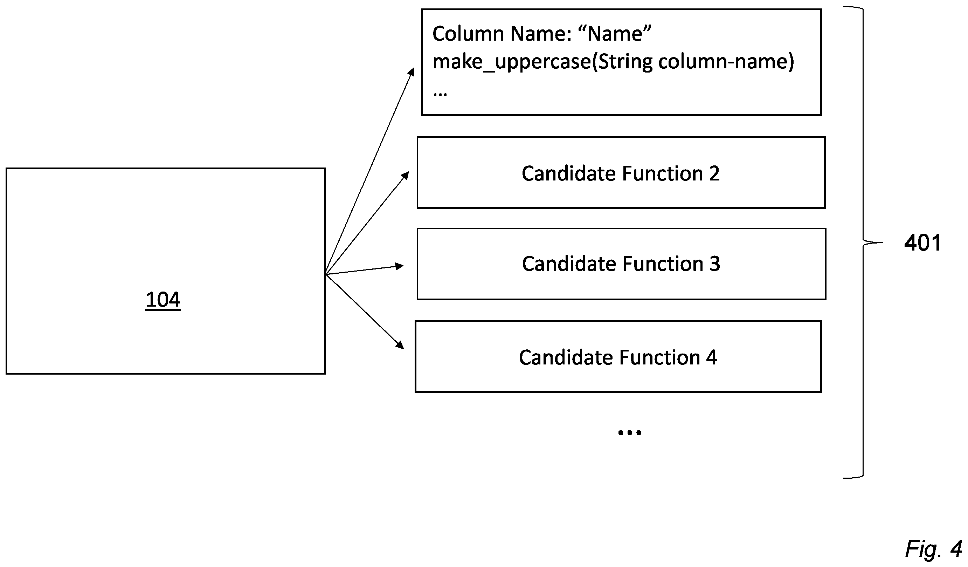

Fig. 4 schematically illustrates the generation of a plurality of candidate functions 401 by an artificial intelligence model 104 in accordance with embodiments of the disclosure. Each candidate function 401 may identify the column(s), row(s) or cell(s) on which code should be executed and a plain text version of the code for execution.

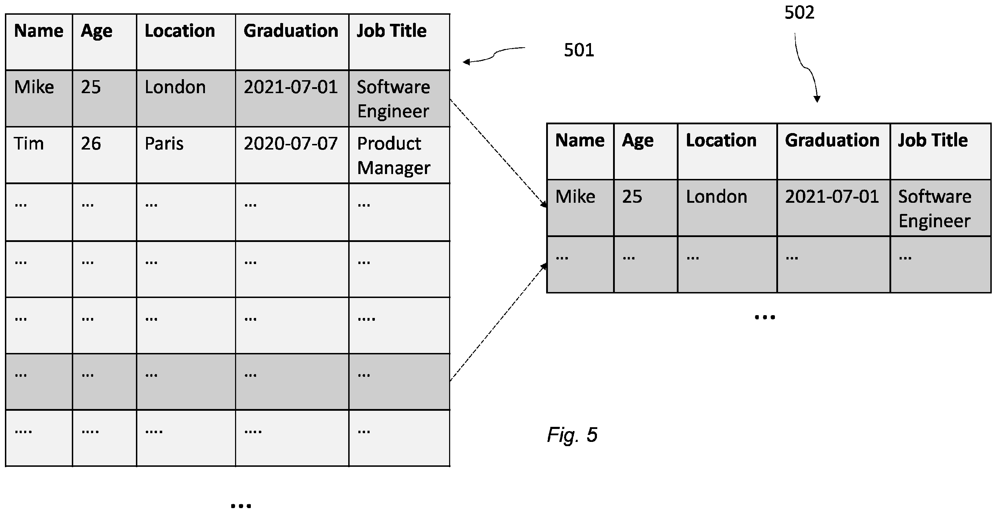

Fig. 5 schematically illustrates the generation of a first subset 502 of a first dataset 501 in accordance with embodiments of the disclosure. A sample of rows may be extracted from the first dataset 501 to form the first subset 502. The first dataset 501 may include millions or billions of rows (not illustrated). The first subset 502 may comprise a predetermined number of rows, such as 10, 50, or 100, or the first subset 502 may comprise a predetermined proportion of the rows of the first dataset 501.

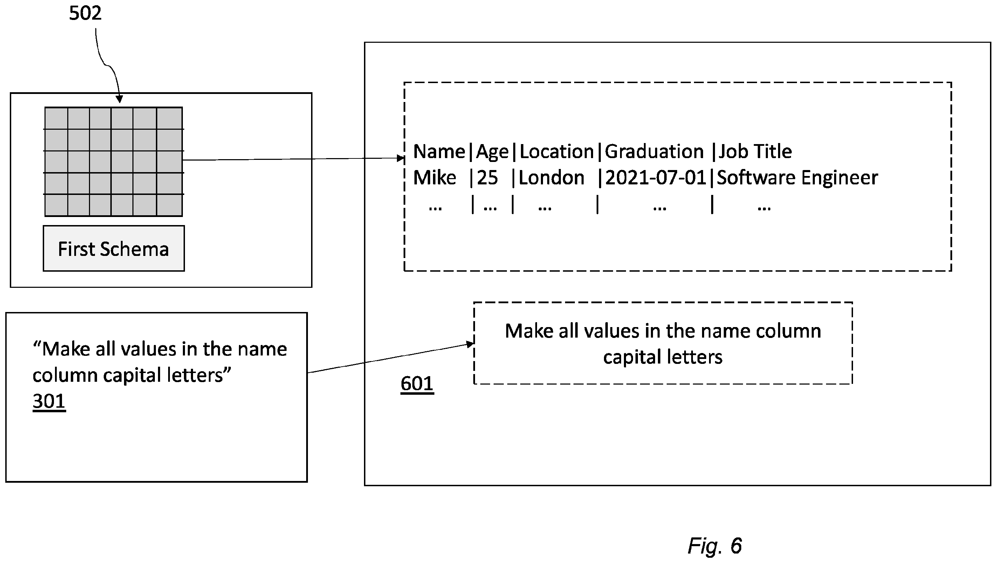

Fig. 6 schematically illustrates the generation of a request 601 to generate a transformation on a first subset in accordance with embodiments of the disclosure. The request 601 comprises the first subset.

In this embodiment, the request 601 to generate a transformation on a first subset is formatted to provide a suitable input for an artificial intelligence model 104 that is configured to receive plain text data as an input. As such, the data manipulation manager 103 generates the request by combining a plain text formatted version of the first subset 502 with the indication of the target outcome 301.

At least part of the request 601 may have the form of a natural language command for the artificial intelligence model 104 to perform a manipulation on the plain text formatted version of the first subset. In this example, the indication of the target outcome 301 in an instruction to the artificial intelligence model 104 to make all values in the name column capital letters.

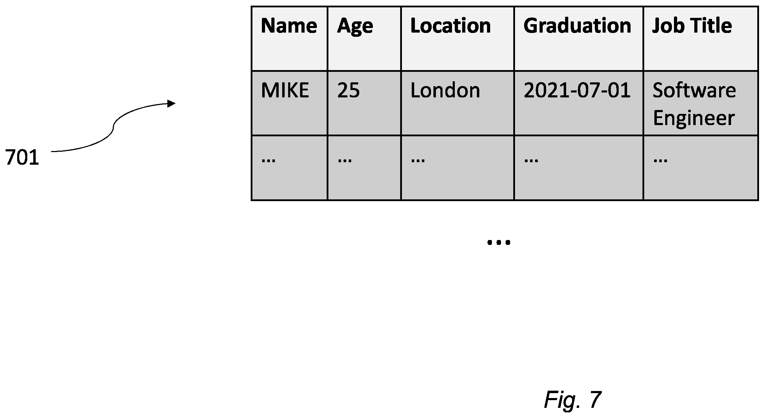

Fig. 7 schematically illustrates an AI transformation 701 of the first subset generated in response to the request 601 to generate a transformation of the first subset. The data manipulation manager 103 parses a plain text version of the AI transformation 701 received from the artificial intelligence module to provide a tabular dataset, as shown in Fig. 7. In the illustrated example, the AI transformation 107 of the first subset correspond to the first subset with the values in the name column being changed to capital letters.

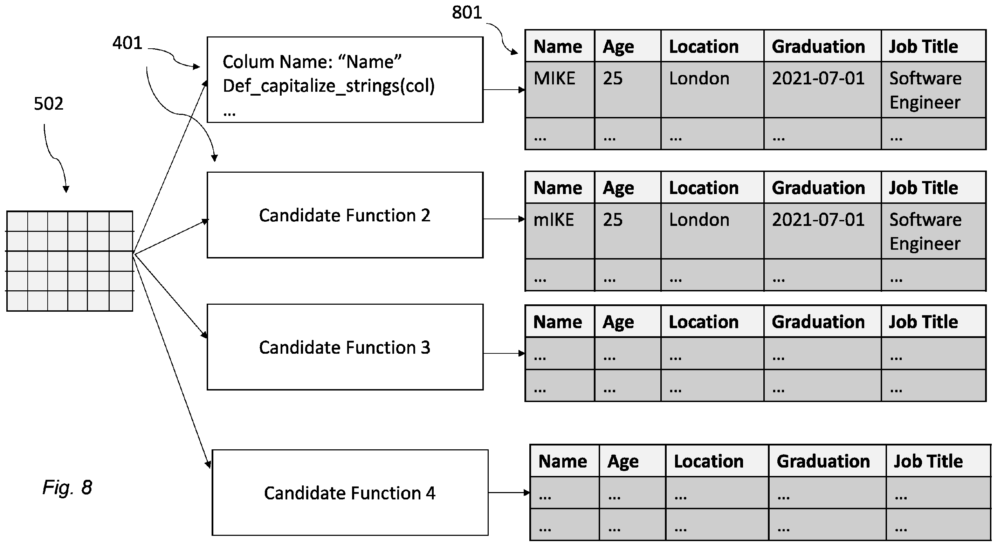

Fig. 8 illustrates the process of executing candidate functions 401 on the first subset 502 to generate test transformations 801. In this illustrative example, it can be seen that a first candidate function 401 has generated a first test transformation 801 that matches the AI transformation 701 of Fig. 7. In contrast, the candidate function 2 has introduced an error in the second test transformation, which does not match the AI transformation 701. Consequently, the first candidate function 401 can be verified by the data manipulation manager 103 by confirming that it matches the AI transformation 107 and executed on the first dataset 501 to achieve the target outcome. Because the second test transformation does not match the AI transformation 701, the second candidate function 401 will not be verified and will not be executed on the first dataset.

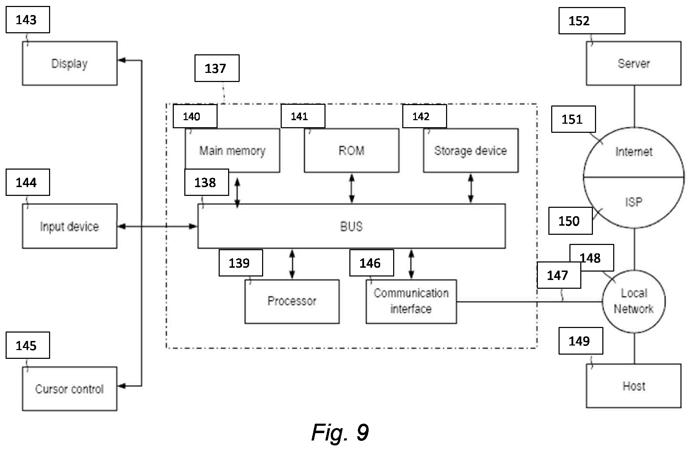

Fig. 9 shows a block diagram of an exemplary computer system 137, which may comprise the data manipulation manager 103, and one or more of the servers hosting the data processing platform 102, the data storage 109, and the artificial intelligence model 104, consistent with examples of the present specification is shown.

Computer system 137 includes a bus 138 or other communication mechanism for communicating information, and a hardware processor 139 coupled with bus 138 for processing information. Hardware processor 139 can be, for example, a general purpose microprocessor. Hardware processor 139 comprises electrical circuitry.

Computer system 137 includes a main memory 140, such as a random access memory (RAM) or other dynamic storage device, which is coupled to the bus 138 for storing information and instructions to be executed by processor 139. The main memory 140 can also be used for storing temporary variables or other intermediate information during execution of instructions by the processor 139. Such instructions, when stored in non-transitory storage media accessible to the processor 139, render the computer system 137 into a special-purpose machine that is customized to perform the operations specified in the instructions.

Computer system 137 further includes a read only memory (ROM) 141 or other static storage device coupled to the bus 138 for storing static information and instructions for the processor 139. A storage device 142, such as a magnetic disk or optical disk, is provided and coupled to the bus 138 for storing information and instructions.

Computer system 137 can be coupled via the bus 138 to a display 143, such as a cathode ray tube (CRT), liquid crystal display, or touch screen, for displaying information to a user. An input device 144, including alphanumeric and other keys, is coupled to the bus 138 for communicating information and command selections to the processor 139. Another type of user input device is cursor control 145, for example using a mouse, a trackball, or cursor direction keys for communicating direction information and command selections to the processor 139 and for controlling cursor movement on the display 143. The input device typically has two degrees of freedom in two axes, a first axis (for example, x) and a second axis (for example, y), that allows the device to specify positions in a plane.

Computer system 137 can implement the techniques described herein using customized hard-wired logic, one or more ASICs or FPGAs, firmware and/or program logic which in combination with the computer system causes or programs computer system 137 to be a special-purpose machine. According to some embodiments, the operations, functionalities, and techniques disclosed herein are performed by computer system 137 in response to the processor 139 executing one or more sequences of one or more instructions contained in the main memory 140. Such instructions can be read into the main memory 140 from another storage medium, such as storage device 142. Execution of the sequences of instructions contained in main memory 140 causes the processor 139 to perform the process steps described herein. In alternative embodiments, hard-wired circuitry can be used in place of or in combination with software instructions.

The term "storage media" as used herein refers to any non-transitory media that stores data and/or instructions that cause a machine to operate in a specific fashion. Such storage media can comprise non-volatile media and/or volatile media. Non-volatile media includes, for example, optical or magnetic disks, such as storage device 142. Volatile media includes dynamic memory, such as main memory 140. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from, but can be used in conjunction with, transmission media. Transmission media participates in transferring information between storage media. For example, transmission media includes coaxial cables, copper wire and fibre optics, including the wires that comprise bus 138. Transmission media can also take the form of acoustic or light waves, such as those generated during radio-wave and infra-red data communications.

Various forms of media can be involved in carrying one or more sequences of one or more instructions to processor 139 for execution. For example, the instructions can initially be carried on a magnetic disk or solid state drive of a remote computer. The remote computer can load the instructions into its dynamic memory and send the instructions over a telephone line or other transmission medium using a modem. A modem local to computer system 137 can receive the data on the telephone line or other transmission medium and use an infra-red transmitter to convert the data to an infra-red signal. An infra-red detector can receive the data carried in the infra-red signal and appropriate circuitry can place the data on bus 138. Bus 138 carries the data to the main memory 140, from which the processor 139 retrieves and executes the instructions. The instructions received by the main memory 140 can optionally be stored on the storage device 142 either before or after execution by the processor 139.

Computer system 137 also includes a communication interface 146 coupled to the bus 138. The communication interface 146 provides a two-way data communication coupling to a network link 147 that is connected to a local network 148. For example, the communication interface 146 can be an integrated services digital network (ISDN) card, cable modem, satellite modem, or a modem to provide a data communication connection to a corresponding type of telephone line. As another example, the communication interface 146 can be a local area network (LAN) card to provide a data communication connection to a compatible LAN. Wireless links can also be implemented. In any such implementation, the communication interface 146 sends and receives electrical, electromagnetic or optical signals that carry digital data streams representing various types of information.

The network link 147 typically provides data communication through one or more networks to other data devices. For example, the network link 147 can provide a connection through the local network 148 to a host computer 149 or to data equipment operated by an Internet Service Provider (ISP) 150. The ISP 150 in turn provides data communication services through the world wide packet data communication network now commonly referred to as the "Internet" 151. The local network 148 and internet 151 both use electrical, electromagnetic or optical signals that carry digital data streams. The signals through the various networks and the signals on the network link 147 and through the communication interface 146, which carry the digital data to and from the computer system 137, are example forms of transmission media.

The computer system 137 can send messages and receive data, including program code, through the network(s), network link 147 and communication interface 146.

The following numbered clauses form part of the disclosure and do not define the claims.

Clause 1. A computer-implemented method for manipulating data structures, the method comprising:
receiving an indication of a target outcome, where the target outcome defines a transformation of a first dataset;
providing to a first artificial intelligence model, based on the indication of a target outcome, one or more requests to generate candidate functions for generating a transformation in accordance with the target outcome when executed on the first dataset;
receiving, in response to the one or more requests, a plurality of distinct candidate functions from the first artificial intelligence model;
providing, to a second artificial intelligence model, a request to generate the transformation on a first subset, wherein the first subset is a subset of the first dataset and wherein the request comprises the first subset;
receiving, from the second artificial intelligence model, an AI transformation of the first subset;
executing each of the plurality of candidate functions on the first subset to generate a plurality of test transformations of the first subset;
validating one or more of the candidate functions, where a candidate function is validated by determining that the test transformation of the first subset generated by the candidate function matches the AI transformation of the first subset; and executing one of the validated candidate functions on the first dataset to achieve the transformation of the first dataset.

Clause 2. The computer-implemented method of Clause 1, wherein the first and second artificial intelligence model are the same artificial intelligence model.

Clause 3. The computer-implemented method of Clause 1 or Clause 2, wherein the indication of the target outcome is a natural language description of a transformation to be applied to the first dataset.

Clause 4. The computer-implemented method of Clause 3, wherein the one or more requests to generate candidate functions each comprise a context portion and the natural language description of the transformation to be applied to the first dataset, wherein the context portion comprises a schema of the first data set.

Clause 5. The computer-implemented method of Clause 4, wherein the context portion further comprises examples of target outcomes and corresponding candidate functions.

Clause 6. The computer-implemented method of any preceding Clause, further comprising:
extracting a schema of the first dataset from the first dataset; and
generating the one or more requests to generate candidate functions by combining the indication of the target outcome with a schema of the first dataset.

Clause 7. The computer-implemented method of any preceding claim, further comprising:
generating the first subset, wherein generating the first subset comprises one or more of:
selecting a randomly distributed sample of rows from the first dataset;
selecting evenly spaced rows from the first dataset; and
identifying rows comprising non-standard entries and selecting the identified rows.

Clause 8. The computer-implemented method of any of Clauses 1 to 6, wherein generating the first subset comprises generating a dataset having the same schema as the first dataset, and wherein the values of cells in the subset are generated from a source other than the first dataset.

Clause 9. The computer-implemented method of any preceding Clause, wherein the request to generate the transformation on the first subset comprises a plain text formatted version of the first subset combined with the indication of a target outcome.

Clause 10. The computer-implemented method of any preceding Clause, wherein the AI transformation of the first subset is received from the artificial intelligence model in plain text form, and
wherein validating one or more of the candidate functions comprises parsing the AI transformation of the first subset into a tabular data form and determining whether one or more of the test transformations matches the AI transformation.

Clause 11. The computer-implemented method of any preceding Clause, wherein at least one of the first artificial intelligence model and the second artificial intelligence models are large language models (LLMs).

Clause 12. The computer-implemented method of any preceding claim, wherein the first artificial intelligence model is fine-tuned to provide the plurality of candidate functions in a predetermined programming language as an output in response to an input comprising the indication of the target outcome and a schema, and the second artificial intelligence model is fine-tuned to provide the AI transformation as an output in response to an input comprising the first subset and the indication of the target outcome.

Clause 13. The computer-implemented method of any preceding claim, further comprising:
determining a first validated candidate function of a plurality of validated candidate functions for which the time taken to generate the test transformation is shorter than the time taken for any other validated candidate function to generate a respective test transformation, wherein
the validated candidate function that is executed on the first dataset is the first validated candidate function.

Clause 14. A non-transitory computer readable medium comprising instructions that, when executed, cause one or more processors of a computing system to perform the method of any of Clauses 1 to 13.

Clause 15. An apparatus comprising:
one or more processors; and
a memory storing instructions that, when executed by the one or more processors, cause the apparatus to perform the method of any of Clause 1 to 13.

## Claims

1. A computer-implemented method for manipulating data structures, the method comprising:
receiving (202) an indication of a target outcome, wherein the target outcome defines a transformation of a first dataset;
providing (204) to a first artificial intelligence model (104), based on the indication of a target outcome, one or more requests to generate candidate functions for generating a transformation in accordance with the target outcome when executed on the first dataset (501);
receiving (206), in response to the one or more requests, a plurality of distinct candidate functions from the first artificial intelligence model (104);
generating a first subset (502), wherein the first subset (502) is a subset of the first dataset (501) and wherein generating the first subset (502) comprises one or more of:
selecting a randomly distributed sample of rows from the first dataset (501);
selecting evenly spaced rows from the first dataset (501); and
identifying rows comprising non-standard entries and selecting the identified rows;
providing (208), to a second artificial intelligence model, a request (601) to generate the transformation on the first subset (502), wherein the request comprises the first subset;
receiving (210), from the second artificial intelligence model, an AI transformation of the first subset (502);
executing (212) each of the plurality of candidate functions (401) on the first subset to generate a plurality of test transformations of the first subset; and
validating (214) one or more of the candidate functions, wherein a candidate function (401) is validated by determining that the test transformation of the first subset generated by the candidate function matches the AI transformation of the first subset (502), and
executing (216) one of the validated candidate functions on the first dataset to achieve the transformation of the first dataset.

2. The computer-implemented method of claim 1, wherein the first and second artificial intelligence models are the same artificial intelligence model (104).

3. The computer-implemented method of claim 1 or claim 2, wherein the indication of the target outcome is a natural language description of a transformation to be applied to the first dataset (501).

4. The computer-implemented method of claim 3, wherein the one or more requests to generate candidate functions each comprise a context portion (305) and the natural language description (302) of the transformation to be applied to the first dataset, wherein the context portion comprises a schema (303) of the first dataset.

5. The computer-implemented method of claim 4, wherein the context portion further comprises examples of target outcomes and corresponding candidate functions.

6. The computer-implemented method of any preceding claim, further comprising:
extracting a schema (303) of the first dataset from the first dataset; and
generating the one or more requests to generate candidate functions by combining the indication of the target outcome with a schema of the first dataset.

7. The computer-implemented method of any preceding claim, wherein the request to generate the transformation on the first subset (502) comprises a plain text formatted version of the first subset combined with the indication of a target outcome.

8. The computer-implemented method of any preceding claim, wherein the AI transformation of the first subset (502) is received from the second artificial intelligence model (104) in plain text form, and
wherein validating one or more of the candidate functions (401) comprises parsing the AI transformation of the first subset into a tabular data form and determining whether one or more of the test transformations matches the AI transformation.

9. The computer-implemented method of any preceding claim, wherein at least one of the first artificial intelligence model and the second artificial intelligence model is a large language model, LLM.

10. The computer-implemented method of any preceding claim, wherein the first artificial intelligence model (104) is fine-tuned to provide the plurality of candidate functions (401) in a predetermined programming language as an output in response to an input comprising the indication of the target outcome and a schema, and
the second artificial intelligence model is fine-tuned to provide the AI transformation as an output in response to an input comprising the first subset and the indication of the target outcome.

11. The computer-implemented method of any preceding claim, further comprising:
determining a first validated candidate function of a plurality of validated candidate functions for which the time taken to generate the test transformation is shorter than the time taken for any other validated candidate function to generate a respective test transformation, wherein
the validated candidate function that is executed on the first dataset is the first validated candidate function.

12. A non-transitory computer readable medium comprising instructions that, when executed, cause one or more processors of a computing system to perform the method of any of claims 1 to 11.

13. An apparatus comprising:
one or more processors (139); and
a memory (140) storing instructions that, when executed by the one or more processors, cause the apparatus to perform the method of any of claims 1 to 11.
